(19) Europäisches Patentamt
European Patent Office
Office européen des brevets

(11) Veröffentlichungsnummer: **0 012 414**
**B1**

(12) **EUROPÄISCHE PATENTSCHRIFT**

(45) Veröffentlichungstag der Patentschrift: **11.11.81**

(51) Int. Cl.³: **C 08 L 75/04**, C 08 G 18/08

(21) Anmeldenummer: **79105045.3**

(22) Anmeldetag: **10.12.79**

# (54) Verfahren zur Herstellung von thermoplastischen Chemiewerkstoffen.

(30) Priorität: **16.12.78 DE 2854386**

(43) Veröffentlichungstag der Anmeldung: **25.06.80 (Patentblatt 80/13)**

(45) Bekanntmachung des Hinweises auf die Patenterteilung: **11.11.81 Patentblatt 81/45**

(84) Benannte Vertragsstaaten: **BE DE FR GB IT NL**

(56) Entgegenhaltungen:
**DE - A - 1 769 570**
**DE - A - 2 128 199**
**DE - A1 2 447 368**

(73) Patentinhaber: **BAYER AG**
**Zentralbereich Patente, Marken und Lizenzen**
**D-5090 Leverkusen 1, Bayerwerk (DE)**

(72) Erfinder: **Goyert, Wilhelm, Dr.**
**Wolfskaul 10**
**D-5000 Köln 80 (DE)**
Erfinder: **Meisert, Ernst, Dr.**
**Am Kiesberg 19**
**D-5090 Leverkusen 1 (DE)**
Erfinder: **Grimm, Wolfgang**
**Im Holzhausen 81**
**D-5090 Leverkusen 3 (DE)**
Erfinder: **Eitel, Alfred, Dr.**
**Bahnhofstrasse 41**
**D-4047 Dormagen (DE)**
Erfinder: **Wagner, Hans, Dr.**
**Tizianstrasse 13**
**D-4047 Dormagen 1 (DE)**
Erfinder: **Niederdellmann, Georg, Dr.**
**Heinestrasse 6**
**D-4047 Dormagen 1 (DE)**
Erfinder: **Quiring, Bernd, Dr.**
**Albrecht-Haushofer-Strasse 2**
**D-5090 Leverkusen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 17, rue du Louvre, 75001 Paris, France

# Verfahren zur Herstellung von thermoplastischen Chemiewerkstoffen

Die vorliegende Erfindung betrifft ein Verfahren zur Verbesserung der mechanischen Eigenschaften von thermoplastischen Polymeren, indem man in einer Schneckenmaschine in dem geschmolzenen Thermoplasten Polyisocyanate mit niedermolekularen Kettenverlängerungsmitteln zur Reaktion bringt. Es werden auf diese Weise im Thermoplasten Hartsegmente aufgebaut und man erhält ein thermoplastisches Mischpolymer mit verbesserter Härte und Festigkeit.

Aus den DE-Offenlegungsschriften 23 02 564, 24 23 764 und 25 49 372 sind Verfahren zur kontinuierlichen Herstellung von thermoplastischen Polyurethanen in 2-welligen Schneckenmaschinen mit selbstreinigender Schnecken geometrie durch Umsetzung von höhermolekularen Polyhydroxylverbindungen, Polyisocyanaten und Kettenverlängerungsmitteln bekanntgeworden. Das Reaktionsgemisch muß hierbei in einem Stadium, in welchem die Schmelze noch eine niedrige Viskosität (ca. 20 bis 70 Pa.s) hat, mit Hilfe von Knetelementen in der Schnecke intensiv gemischt werden, damit die Bildung von Inhomogenitäten im Endprodukt vermieden wird. Gemäß einer Verfahrensvariante können dem Produkt in der Schneckenmaschine während oder nach der Reaktion auch Zuschlagstoffe wie z.B. Thermoplaste beigemengt werden. Es findet sich jedoch kein Hinweis darauf, die mechanischen Eigenschaften von Thermoplasten durch gezielten Einbau von Polyurethan-Hartsegmenten zu verbessern.

US-PS 3 049 505 und DE-OS 1 570 073 betreffen Gemische von thermoplastischen Polyurethanen und Pfropfmischpolymerisaten, welche sich durch hohe Reißfestigkeit auszeichnen. Es wird jedoch in diesen Literaturstellen kein Hinweis gegeben, derartige Gemische in einer Reaktionsschnecke herzustellen bzw. ein hartes Polyurethan in Gegenwart des Pfropfmischpolymerisats aufzubauen.

Gegenstand von DE-OS 2 011 508 ist ein Verfahren zur Herstellung von sehr harten thermoplastischen Polyurethanelastomeren aus weicheren thermoplastischen Polyurethanen, in dem man die weichen Polyurethane mit 5 bis 50 Gew.-% an « Hartkomponenten » als Füllstoff vermischt. Diese « Hartkomponenten » sind Umsetzungsprodukte von Diisocyanaten mit niedermolekularen Glykolen. Über die Verwendung von Reaktionsschnecken wird jedoch nichts ausgesagt. Da gemäß DE-OS 2 011 508 die fertigen Hartkomponenten als Füllstoff zugemischt werden, erhält man relativ inhomogene Verfahrensprodukte mit unbefriedigenden Festigkeitseigenschaften. Im Gegensatz hierzu werden erfindungsgemäß die Hartkomponenten erst in Gegenwart des bereits vorgefertigten weicheren Thermoplasten in einer Reaktionsschnecke gebildet, was zu völlig homogenen Produkten von hoher Festigkeit führt.

Gegenstand der vorliegenden Erfindung ist ein kontinuierliches Verfahren zur Herstellung von thermoplastischen Chemiewerkstoffen durch Umsetzung von

a) einem oder mehreren organischen Polyisocyanaten, vorzugsweise Diisocyanaten, mit

b) einem oder mehreren, Hydroxylgruppe und/oder Aminogruppen aufweisenden Kettenverlängerungsmitteln mit einem Molekulargewicht unter 400, vorzugsweise unter 250,

wobei das Verhältnis der NCO-Gruppen von Komponente a) zu den zerewitinoffaktiven Gruppen der Komponente b) zwischen 0,9 und 1,2, bevorzugt zwischen 0,95 und 1,1, liegt, in Gegenwart von vorgefertigten thermoplastischen Polymeren in Extrudern, bevorzugt Mehrwellenextrudern, besonders bevorzugt Zweiwellenschneckenmaschinen mit selbstreinigender Schneckengeometrie, welches dadurch gekennzeichnet ist, daß man 70 bis 98 Gew.-%, vorzugsweise 80 bis 96 Gew.-%, bezogen auf Verfahrensprodukt, des vorgefertigten thermoplastischen Polymeren über eine erste Einspeisstelle in den Extruder einbringt, danach über eine zweite und gegebenenfalls weitere Einspeisstellen 2 bis 30 Gew.-%, bevorzugt 4 bis 20 Gew.-%, bezogen auf Verfahrensprodukt, der Komponenten a) und b) dem aufgeschmolzenen thermoplastischen Polymeren zudosiert und, nachdem die Umsetzung der Komponenten a) und b) im wesentlich abgeschlossen ist, das Verfahrensprodukt aus dem Extruder austrägt.

Mittels des erfindungsgemäßen in situ-Aufbaus von relativ geringen Mengen an Hartsegmenten in einem vorgefertigten Thermoplasten ist es möglich, auch aus thermoplastischen Materialien mit nur mäßigen Härte- und Festigkeitseigenschaften sehr steife und hochelastische Werkstoffe herzustellen. Durch Einbringung von 2 oder mehr Polyisocyanaten in das Polymergefüge gelingt es, Produkte mit einem sehr breiten Schmelzbereich zu erhalten.

Als vorgefertigtes thermoplastisches Polymer kommen erfindungsgemäß insbesondere die an sich bekannten thermoplastischen Polyurethane in Frage, wie sie beispielsweise gemäß GB-PS 1 057 018, den DE-Auslegeschriften 1 106 559, 1 157 772 und 1 165 852 sowie den DE-Offenlegungsschriften 23 02 564, 24 23 764 und 25 49 372 (US-PS 3 963 679) bzw. 24 02 864 (US-PS 3 984 607) sowie der DE-AS 24 57 387 (US-PS 4 035 213) aus den dort beschriebenen Ausgangsprodukten erhalten werden.

Erfindungsgemäß kommen jedoch auch andere Thermoplasten in Betracht, beispielsweise die an sich bekannten ABS-Pfropfcopolymerisate. Hierbei handelt es sich um elastisch — thermoplastische Produkte, welche im wesentlichen aus den Monomeren Acrylnitril (A), Butadien (B) und Styrol bzw. α-Methylstyrol (S) aufgebaut sind. B kann ganz oder teilweise durch eine andere Kautschukkomponente ersetzt sein, z.B. durch einen EPDM-Kautschuk (sogenannte AES-Polymerisate). Diese Polymerisate werden in an sich bekannter Weise durch Emulsions-, Suspensions-, Masse- und Lösungspolymerisation bz. Kombinationen dieser Verfahren hergestellt, wie es z.B. von V.H. Basdekis in « ABS-Plastics »,

Reinhold Publishing Corporation, New York, 1964, beschrieben wird.

Andere erfindungsgemäß geeignete Thermoplaste sind Polyäthylen und Polypropylen (derartige Polymerisate sollten im erfindungsgemäßen Verfahren jedoch nur in einer Menge von maximal 10 Gew.-%, bezogen auf gesamtes Verfahrensprodukt, mitverwendet werden), Copolymerisate aus Äthylen und weiteren olefinisch ungesättigten Monomeren, Polybuten-(1), Polymethylpenten, Polystyrol (insbesondere schlagzähes Polystyrol), PVC, Polymethacrylsäuremethylester, Polyamide, aromatische Polyäther (z.B. Polyphenylenoxid), Polyester aus Terephthalsäure und gegebenenfalls Isophthalsäure sowie Butylenglykol und/oder Äthylenglykol, Polyäther-Weichsegmente enthaltendes Polybutylenglykolterephthalat, Celluloseester (z.B. Celluloseacetat-, propionat und- acetobutyrat), Styrol-Butadien-(Pfropf) copolymerisate (gegebenenfalls in Abmischung mit weiteren Polymerisaten), sowie Polypropylen und Äthylen-Propylen-Copolymere in Abmischung mit EPM und/oder EPDM-Kautschuken. Polymerisate dieser Art werden z.B. von Vieweg et al. im « Kunststoff-Handbuch », Bd. II, IV-VII, IX und XI, Carl Hanser-Verlag, München, 1963-1971, und von Hansjürgen Saechtling im «Kunststofftaschenbuch », 20. Ausgabe, Carl Hanser-Verlag, München-Wien, 1977, beschrieben.

Erfindungsgemäß bevorzugte ABS-Polymerisate sind Mischungen aus

a) 5 bis 70 Gew.-% eines oder mehrerer Pfropfprodukte, und

b) 95 bis 30 Gew.-% eines oder mehrerer thermoplastischer Harze.

Pfropfprodukte (a) sind bevorzugt Polymerisate, die durch Polymerisation von Pfropfmonomeren in Anwesenheit eines Kautschuks als Pfropfbasis erhalten werden. Der Kautschukanteil beträgt dabei ca. 5 bis 80 Gew.-% und wird durch das Polymerisationsverfahren mitbestimmt.

Als Pfropfbasis kommen insbesondere Polybutadien-, Butadien/Acrylnitril- und Butadien/Styrol-Polymerisate sowie Butadien-Styrol-Blockpolymerisate in Betracht. Pfropfmonomere sind hauptsächlich Styrol, Gemische aus Styrol und Acrylnitril, bevorzugt im Gewichtsverhältnis 90 : 10 bis 50 : 50, Gemische aus Styrol und Methylmethacrylat, bevorzugt im Gewichtsverhältnis 5 : 95 bis 95 : 5, sowie Styrol-Acrylnitril-Methylmethacrylat-Gemische.

Das den zweiten Bestandteil der ABS-Polymerisate bildende thermoplastische Harz (b) bildet die kontinuierliche Phase (Matrix) und ist z.B. ein Polymerisat oder Copolymerisat von Styrol, α-Methylstyrol, Acrylnitril, Methylmethacrylat und Maleinsäureanhydrid. Bevorzugt sind Polystyrol, Styrol-Acrylnitril-Copolymerisate mit einem Acrylnitril-Gehalt von 20 bis 35 Gew.-%, sowie α-Methylstyrol-Acrylnitril-Copolymere mit einem Acrylnitril-Gehalt von 20 bis 31 Gew.-%. Das Gewichtsmittel des Molekulargewichts dieser Harze beträgt in der Regel 50 000 bis 550 000. Die molekulare Uneinheitlichkeit, ausgedrückt durch den Wert

$$\left(\frac{M_W}{M_n}\right) - 1 = U_n$$

ist 1,0 bis 3,5.

Gegebenenfalls kann erfindungsgemäß jedoch auch die Komponente (a) allein als Thermoplast eingesetzt werden.

Als erfindundsgemäß einzusetzende thermoplastische Polycarbonate kommen die durch Umsetzung von Dihydroxydiarylalkanen mit Phosgen oder Diestern der Kohlensäure erhältlichen Polykondensate in Betracht, wobei neben den unsubstituierten Dihydroxydiarylalkanen auch solche geeignet sind, deren Arylreste in o- und/oder m-Stellung zur Hydroxylgruppe Methylgruppen oder Halogenatome tragen. Ebenso sind verzweigte Polycarbonate geeignet. Diese Polycarbonate haben im allgemeinen mittlere Molekulargewichte zwischen 10 000 und 100 000, vorzugsweise zwischen 20 000 und 40 000.

Geeignete aromatische Dihydroxyverbindungen sind z.B. Hydrochinon, Resorcin, 4,4'-Dihydroxydiphenyl, Bis-(hydroxy-phenylalkane) wie beispielsweise $C_1$-$C_8$-Alkylen- bzw. $C_2$-$C_8$-Alkylidenbisphenole, Bis-(hydroxyphenyl)-cycloalkane wie beispielsweise $C_5$-$C_{15}$-Cycloalkylen- bzw. $C_5$-$C_{15}$-Cycloalkylidenbisphenole, Bis-(hydroxy-phenyl)-sulfide, -äther, -ketone, -sulfoxide oder -sulfone.

Ferner α, α'-Bis-(hydroxyphenyl)-diisopropylbenzol sowie die entsprechenden kernalkylierten bzw. kernhalogenierten Verbindungen. Bevorzugt sind Polycarbonate auf Basis von Bis-(4-hydroxy-phenyl)-propan-2,2 (Bisphenol A), Bis-(4-hydroxy-3,5-dichlor-phenyl)-propan-2,2(Tetrachlorbisphenol A), Bis-(4-hydroxy-3,5-dibrom-phenyl)-propan-2,2 (Tetrabrombisphenol A), Bis-(4-hydroxy-3,5-dimethyl-phenyl)-propan-2,2 (Tetramethylbisphenol A), Bis-(4-hydroxy-phenyl)-cyclohexan-1,1 (Bisphenol Z) sowie auf Basis von Dreikernbisphenolen wie α, α'-Bis-(4-hydroxyphenyl)-p-diisopropylbenzol.

Weitere für die Herstellung von Polycarbonaten geeignete Bisphenole sind in den US-Patenten 3 028 365, 2 999 835, 3 148 172, 3 271 368, 2 970 137, 2 991 273, 3 271 367, 3 280 078, 3 014 891 und 2 999 846 beschrieben.

Als Isocyanatkomponente a) kommen für das erfindungsgemäße Verfahren aliphatische, cycloaliphatische, araliphatische, aromatische und heterocyclische Polyisocyanate in Betracht, wie sie z.B. von W. Siefken in Justus Liebigs Annalen der Chemie, 562, Seiten 75 bis 136, beschrieben werden, beispielsweise solche der Formel

$$Q\,(NCO)_n$$

in der

n = 2-4, vorzugsweise 2,

und

Q einen aliphatischen Kohlenwasserstoffrest mit 2-18, vorzugsweise 6-10 C-Atomen,
einen cycloaliphatischen Kohlenwasserstoffrest mit 4-15, vorzugsweise 5-10 C-Atomen,
einen aromatischen Kohlenwasserstoffrest mit 6-15, vorzugsweise 6-13 C-Atomen,
oder einen araliphatischen Kohlenwasserstoffrest mit 8-15, vorzugsweise 8-13 C-Atomen,

bedeuten, z.B. Äthylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-Cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat.

Ferner kommen beispielsweise erfindungsgemäß in Frage : Triphenylmethan-4,4', 4"-triisocyanat, Polyphenyl-polymethylenpolyisocyanate, wie sie durch Anilin-Formaldehyd-Kondensation und anschließende Phosgenierung erhalten und z.B. in den GB-Patentschriften 874 430 und 848 671 beschrieben werden, m- und p-Isocyanatophenylsulfonyl-isocyanate gemäß der US-Patentschrift 3 454 606, perchlorierte Arylpolyisocyanate, wie sie z.B. in der DE-Auslegeschrift 1 157 601 (US-Patentschrift 3 277 138) beschrieben werden, Carbodiimidgruppen aufweisende Polyisocyanate, wie sie in der DE-Patentschrift 1 092 007 (US-Patentschrift 3 152 162) sowie in den DE-Offenlegungsschriften 2 504 400, 2 537 685 und 2 552 350 beschrieben werden, Norbornan-Diisocyanate gemäß US-Patentschrift 3 492 330, Allophanatgruppen aufweisende Polyisocyanate, wie sie z.B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z.B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z.B. in der BE-Patentschrift 752 261 oder in den US-Patentschriften 3 394 164 und 3 644 457 beschrieben werden, acylierte Harnstoffgruppen aufweisende Polyisocyanate gemäß der DE-Patentschrift 1 230 778, Biuretgruppen aufweisende Polyisocyanate, wie sie z.B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z.B. in der US-Patentschrift 3 654 106 beschrieben werden, Estergruppen aufweisende Polyisocyanate, wie sie z.B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäß der DE-Patentschrift 1 072 385 und polymere Fettsäureester enthaltende Polyisocyanate gemäß der US-Patentschrift 3 455 883.

Es ist auch möglich, die bei der technischen Isocyanatherstellung anfallenden, Isocyanatgruppen aufweisenden Destillationsrückstände, gelöst in einem oder mehreren der vorgenannten Polyisocyanate, einzusetzen. Ferner ist es möglich, beliebige Mischungen der vorgenannten Polyisocyanate zu verwenden.

Bevorzugte Polyisocyanate sind :

Naphthylen-1,5-diisocyanat, 2,4- und/oder 2,6-Toluylendiisocyanat, Isophorondiisocyanat und insbesondere 4,4'-Diphenylmethandiisocyanat und Hexamethylendiisocyanat.

Bei der Mitverwendung von höherfunktionellen Polyisocyanaten ist darauf zu achten, daß nicht zu viele Verzweigungsstellen in das Polyurethan eingeführt werden, so daß ein noch schmelzbares bzw. thermoplastisches Produkt aus der Schneckenmaschine austritt. Eine größere Menge an höherfunktionellen Isocyanaten muß im allgemeinen durch die Mitverwendung von Monoisocyanaten bzw. von im Durchschnitt weniger als difunktionellen Hydroxy- bzw. Aminoverbindungen ausgeglichen werden, so daß eine zu weit gehende chemische Vernetzung des aus der Schnekkenmaschine austretenden Produktes vermieden wird. Es ist aber selbstverständlich möglich, die Reaktion so zu führen, daß eine nachträgliche chemische Vernetzung des Elastomeren während der Lagerung eintritt (z.B. durch Verwendung eines Überschusses an NCO-Gruppen enthaltenden Verbindungen).

Als Kettenverlängerungsmittel b) werden erfindungsgemäß Hydroxylgruppen und/oder Aminogruppen enthaltende Verbindungen mit einem Molekulargewicht von 32 bis 400, vorzugsweise 62 bis 250, eingesetzt. Diese Verbindungen weisen in der Regel 2 bis 4, vorzugsweise 2, gegenüber Isocyanaten reaktionsfähige Wasserstoffatome auf. Selbstverständlich können auch Gemische solcher Verbindungen verwendet werden.

Als Beispiele für derartige Verbindungen seien genannt : Äthylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethylcyclohexan 2-Methyl-1,3-propandiol, Dibrombutendiol (US-Patentschrift 3 723 392), Glyzerin, Trimethylolpropan, Hexantriol-(1,2,6), Trimethyloläthan, Diäthylenglykol, Triäthylenglykol, Tetraäthylenglykol, höhere Polyäthylenglykole mit einem Molekulargewicht bis 400, Dipropylenglykol, höhere Polypropylenglykole mit einem Molekulargewicht bis 400, Dibutylenglykol, höhere Polybutylenglykole mit einem Molekulargewicht bis 400, 4,4'-Dihydroxy-diphenylpropan, Di-hydroxymethyl-hydrochinon, Äthanolamin, Diäthanolamin, N-Methyldiäthanolamin, Triäthanolamin, 3-Aminopropanol und Hydrochinon-bis-hydroxyäthyläther.

Erfindungsgemaß geeignete aliphatische Diamine sind beispielsweise Äthylendiamin, 1,4-Tetramethylendiamin, 1,11-Undecamethylendiamin, 1,12-Dodecamethylendiamin sowie deren Gemische, 1-Amino-3,3,5-trimethyl-5-aminomethylcyclohexan (« Isophorondiamin »), 2,4- und 2,6-Hexahydrotoluylendiamin sowie deren Gemische, Perhydro-2,4'- und 4,4'-diaminodiphenylmethan, p-Xylylendiamin, Bis-(3-aminopropyl)-methylamin, Diamino-perhydroanthrazene (DE-Offenlegungsschrift 2 638 731) und cycloaliphatische Triamine gemäß DE-Offenlegungsschrift 2 614 244. Auch Hydrazin und substituierte Hydrazine, z.B. Methylhydrazin, N,N'-Dimethylhydrazin und deren Homologe sowie Säuredihydrazide kommen erfindungsgemäß in Betracht, z.B. Carbodihydrazid, Oxalsäuredihydrazid, die Dihydrazide von Malonsäure, Bernsteinsäure, Glutarsäure, Adipinsäure, β-Methyladipinsäure, Sebazinsäure, hydracrylsäure und Terephthalsäure ; Semicarbazido-alkylen-hydrazide wie z.B. β-Semicarbazidopropionsäurehydrazid (DE-Offenlegungsschrift 1 770 591), Semicarbazido-alkylencarbazinester wie z.B. 2-Semicarbazidoäthyl-carbazinester (DE-Offenlegungsschrift 1 918 504) oder auch Amino-semicarbazid-Verbindungen wie z.B. β-Aminoäthyl-semicarbazido-carbonat (DE-Offenlegungsschrift 1 902 931).

Als Beispiele für aromatische Diamine seien Bisanthranilsäureester gemäß den DE-Offenlegungsschriften 2 040 644 und 2 160 590, 3,5- und 2,4-Diaminobenzoesäureester gemäß DE-Offenlegungsschrift 2 025 900, die in den DE-Offenlegungsschriften 1 803 635 (US-Patentschriften 3 681 290 und 3 736 350), 2 040 650 und 2 160 589 beschriebenen estergruppenhaltigen Diamine, die Äthergruppen aufweisenden Diamine gemäß DE-Offenlegungsschriften 1 770 525 und 1 809 172 (US-Patentschriften 3 654 364 und 3 736 295), gegebenenfalls in 5-Stellung substituierte 2-Halogen-1,3-Phenylendiamine (DE-Offenlegungsschriften 2 001 772, 2 025 896 und 2 065 869), 3,3'-Dichlor-4,4'-diamino-diphenylmethan, Toluylendiamin, 4,4'-Diaminodiphenylmethan, 4,4'-Diaminodiphenyldisulfide (DE-Offenlegungsschrift 2 404 976), Diaminodiphenyldithioäther (DE-Offenlegungsschrift 2 509 404), durch Alkylthiogruppen substituierte aromatische Diamine (DE-Offenlegungsschrift 2 638 760), Diaminobenzolphosphonsäureester (DE-Offenlegungsschrift 2 459 491), Sulfonat- oder Carboxylatgruppen enthaltende aromatische Diamine (DE-Offenlegungsschrift 2 720 166) sowie die in der DE-Offenlegungsschrift 2 635 400 aufgeführten hochscnmelzenden Diamine genannt. Beispiele für aliphatisch-aromatische Diamine sind die Aminoalkylthioaniline gemäß DE-Offenlegungsschrift 2 734 574.

Ferner können gegenüber Isocyanaten monofunktionelle Verbindungen in Anteilen von 0,01 bis 10 Gew.-%, bezogen auf Polyurethanfeststoff, als sogenannte Kettenabbrecher mitverwendet werden. Derartige monofunktionelle Verbindungen sind z.B. Monoamine wie Butyl- und Dibutylamin, Octylamin, Stearylamin, N-Methylstearylamin, Pyrrolidin, Piperidin und Cyclohexylamin, Monoalkohole wie Butanol, 2-Äthylhexanol, Octanol, Dodecanol, die verschiedenen Amylalkohole, Cyclohexanol, Äthylenglykolmonoäthyläther.

Bei der Verwendung mehr als difunktioneller Alkohole bzw. Amine ist in analoger Weise wie bei höherfunktionellen Isocyanaten darauf zu achten, daß eine zu weitgehende chemische Vernetzung des Polyurethans vermieden wird.

Weitere erfindungsgemäß geeignete niedermolekulare Polyole mit einem Molekulargewicht bis 400 sind z.B. Esterdiole der allgemeinen Formeln

$$HO—(CH_2)_x—CO—O—(CH_2)_y—OH$$

und

$$HO—(CH_2)_x—O—CO—R—CO—O—(CH_2)_x—OH$$

in denen

R einen Alkylenrest mit 1-10, vorzugsweise 2-6, C-Atomen bzw. einen Cycloalkylen- oder Arylenrest mit 6-10 C-Atomen

x = 2-6 und

y= 3-5

bedeuten,

z.B. δ-Hydroxybutyl-ε-hydroxy-capronsäureester, ω-Hydroxyhexyl-γ-hydroxybuttersäureester, Adipinsäure-bis-(β-hydroxyäthyl) ester und Terephthalsäure-bis (β-hydroxyäthyl) ester ;

Diolurethane der allgemeinen Formel

$$HO—(CH_2)_x—O—CO—NH—R'—NH—CO—O—(CH_2)_x—OH$$

in der

R' einen Alkylenrest mit 2-15, vorzugsweise 2-6, C-Atomen oder einen Cycloalkylen- oder Arylenrest mit 6-15 C-Atomen und

x eine Zahl zwischen 2 und 6

darstellen,

z.B. 1,6-Hexamethylen-bis-(β-hydroxyäthylurethan) oder 4,4'-Diphenylmethan-bis-(δ-hydroxybutyl-

urethan) ; sowie Diolharnstoffe der allgemeinen Formel

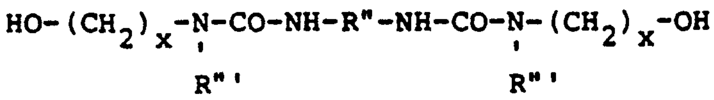

in der

R″ einen Alkylenrest mit 2-15, vorzugsweise 2-9, C-Atomen oder einen Cycloalkylen- oder Arylenrest mit 6-15 C-Atomen,

R‴ Wasserstoff oder eine Methylgruppe und

x die Zahlen 2 oder 3

bedeuten,

z.B. 4,4′-Diphenylmethan-bis-(β-hydroxyäthylharnstoff) oder die Verbindung

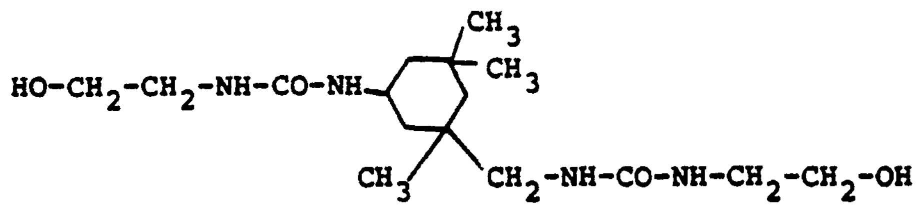

Erfindungsgemäß bevorzugte Kettenverlängerungsmittel sind Äthylenglykol, Diäthylenglykol, Butandiol-1,4, Hexandiol-1,6, Octandiol-1,8 sowie der Hydrochinon-dihydroxyäthyl-äther. Besonders bevorzugt sind Butandiol und Hexandiol-1,6.

Gegebenenfalls kann man im erfindungsgemäßen Verfahren neben den Komponenten a) und b) als weitere Reaktionskomponente im wesentlichen lineare Polyole mit Molekulargewichten zwischen 400 und 10 000, bevorzugt zwischen 450 und 6 000, mitverwenden. Hierfür kommen praktisch alle an sich bekannten, vorzugsweise 2, gegebenenfalls — in untergeordneten Mengen — auch 3, zerewitinoffaktive Wasserstoffatome (im wesentlichen Hydroxylgruppen) enthaltenden Polyester, Polylactone, Polyäther, Polythioäther, Polyesteramide, Polycarbonate, Polyacetale, Vinylpolymere wie z.B. Polybutadiendiole, bereits Urethan- oder Harnstoffgruppen enthaltende Polyhydroxylverbindungen, gegebenenfalls modifizierte natürliche Polyole, sowie auch andere zerewitinoffaktive Gruppen wie Amino-, Carboxyl- oder Thiolgruppen enthaltende Verbindungen in Betracht. Diese Verbindungen entsprechen dem Stand der Technik und werden z.B. in den DE-Offenlegungsschriften 23 02 564, 24 23 764 und 25 49 372 (US-PS 3 963 679) und 24 02 840 (US-PS 3 984 607) sowie der DE-AS 24 57 487 (US-PS 4 035 213) eingehend beschrieben. Bei der Berechnung des NCO/OH-Äquivalentverhältnisses bzw. des Mengenverhältnisses zwischen vorgefertigten thermoplastischen Polymeren und in situ gebildetem Polyurethan sind diese zusätzlichen höhermolekularen Polyole dem Kettenverlängerungsmittel (B) zuzurechnen.

Die Umsetzung der Polyisocyanate mit den Kettenverlängerungsmitteln kann erfindungsgemäß auch gegebenenfalls mit an sich bekannten Katalysatoren, welche im allgemeinen in Mengen von 1 ppm bis 1 000 ppm eingesetzt werden, beschleunigt werden. Geeignete Katalysatoren sind z.B. Salze der Alkali- und Erdalkalimetalle, organische Metallverbindungen wie Zinkoctoat, Zinnoctoat, Dibutylzinn-IV-dilaurat, Eisenacetylacetonat, Titantetrabutylat, Dioctylzinn-IV-diacetat sowie tertiäre Amine wie Triäthylamin, N-Methylmorpholin, N,N,N′,N′-Tetramethyl-äthylendiamin, Diazabicyclooctan, N,N′-Dimethylbenzylamin, 2-Methylimidazol etc. Bei harten Produkten ist es meist nicht notwendig, Katalysatoren mitzuverwenden. Weitere Vertreter von erfindungsgemäß zu verwendenden Katalysatoren sowie Einzelheiten über die Wirkungsweise der Katalysatoren sind im Kunststoff-Handbuch, Band VII, herausgegebenen von Vieweg und Höchtlen, Carl-Hanser-Verlag, München, 1966, auf den Seiten 96 bis 102 beschrieben.

Das erfindungsgemäße Verfahren kann gegebenenfalls auch in Gegenwart von an sich bekannten Gleitmitteln (z.B. Polyolefinen, Polyalkylenoxiden, Polyalkylenestern, Polyalkylenamiden und ähnlichen Wachsen), Stabilisatoren, anorganischen und organischen Füllstoffen, Pigmenten und Farbstoffen, Weichmachern, inerten organischen Lösungsmitteln usw., wie sie dem oben zitierten Stand der Technik entsprechen, durchgeführt werden.

Das erfindungsgemäße Verfahren wird folgendermaßen ausgeführt :

Das zu modifizierende thermoplastische Polymer wird in die Einzugszone des Extruders eingetragen. Die Gehäusetemperatur des Extruders wird dabei so gewählt, daß der Thermoplast aufschmilzt. Durch eine weitere Einspeisstelle werden dann — entweder bereits vorvermischt oder auch getrennt — die die Hartkomponente bildenden Ausgangsverbindungen in das geschmolzene thermoplastische Polymere eindosiert. Es ist dabei auch möglich, die Polyurethanbildenden Komponenten in mehreren Portionen über mehrere Einspeisstellen in den Extruder zu injizieren.

Wie schon erwähnt, verwendet man für das erfindungsgemäße Verfahren vorzugsweise Zweiwellenschneckenmaschinen mit selbstreinigender Schneckengeometrie. Es ist jedoch auch möglich, die Reaktion nur teilweise in einer Mehrwellen-, bevorzugt einer Zweiwellenschneckenmaschine, durchzuführen und das Reaktionsgemisch in einem nachgeschalteten Einwellenextruder ausreagieren zu lassen.

Geeignete Schneckenmaschinen werden z.B. in den DE-Patentschriten 813 154, 862 668 und 940 109, der DE-OS 2 302 564 (US-Patent 3 963 679) sowie den US-Patenten 3 233 025 und 3 642 964 beschrieben.

Die Verweilzeiten der Reaktionsschmelze in der Schneckenmaschine betragen in der Regel 0,3-30 Minuten, bevorzugt 0,5-4 Minuten. Die Temperatur des Schneckengehäuses liegt zwischen etwa 60 und 300 °C (ca. 80 bis 280 °C in der Eingangszone ; ca. 100 bis 300 °C in der Mitte des Extruders und ca. 60 bis 250 °C in der Austragszone). Die aus dem Extruder austretende Schmelze wird nach an sich bekannten Verfahren abgeschreckt und zerkleinert. Die Verfahrensprodukte können auf die übliche Weise thermoplastisch oder in Lösung zu Filmen, Zahnrädern, Kabelummantelungen, Dichtungen usw. verarbeitet werden.

Die folgenden Beispiele erläutern das erfindungsgemäße Verfahren. Wenn nicht anders vermerkt, sind Mengenangaben als Gewichtsteile bzw. Gewichtsprozente zu verstehen. In allen Beispielen wird eine Zweiwellenschneckenknetpresse des Typs ZSK 53 V der Firma Werner & Pfleiderer, Stuttgart, mit selbstreinigendem Wellenbesatz verwendet. Die Länge des Verfahrensteils entspricht etwa dem 42fachen Wellendurchmesser. Für alle Beispiele wird der gleiche Wellenbesatz mit einem Knetelementanteil von ca. 20 % verwendet. Der Verfahrensteil besteht aus 12 Gehäusen, wobei das erste mit einem Einspeisetrichter versehen ist. Funktion und Wirkungsweise der Schneckenmaschine, von Knet- und Förderelementen des Wellenbesatzes usw. sind in den Firmenschriften von Werner & Pfleiderer bzw. in der DE-OS 2 302 564 (US-PS 3 963 679) ausführlich beschrieben.

Beispiel 1

Als zu modifizierender Thermoplast wird ein Polyurethan-Granulat eingesetzt, welches aus folgender Rezeptur hergestellt worden war :

100 Teile eines Polyesters aus Adipinsäure und Äthylenglykol (Molekulargewicht : 2 000),
10 Teile Butandiol-1,4,
0,5 Teile Stearylamid und
41,5 Teile 4,4'-Diphenylmethandiisocyanat (NCO/OH-Äquivalentverhältnis = 1,03).

An der Schneckenmaschine werden folgende Gehäusetemperaturen eingestellt :

| | | | | | | | |
|---|---|---|---|---|---|---|---|
| Gehäuse : | 1 | 3 | 5 | 7 | 9 | 11 | 12 |
| Temperatur (°C) : | 100 | 150 | 190 | 220 | 175 | 120 | 100 |
| Kopftemperatur : | 180 °C | | | | | | |

Versuch a) :

In den Trichter der Schneckenmaschine werden 152 Teile des Thermoplastischen Polyurethans eingetragen. Über eine Einspeisstelle im Gehäuse 5 wird eine Gemisch aus

15 Teilen 1,4-Butandiol und
42,9 Teilen 4,4'-Diphenylmethandiisocyanat (NCO/OH-Verhältnis = 1,03)

in die Schneckenmaschine injiziert. Das Verfahrensprodukt hat eine Härte (Shore D) von 59 und eine Rückprallelastizität von 36 % (DIN 53512).

Versuch b) :

Analog zu Versuch a) wird ein Gemisch aus
20 Teilen 1,4-Butandiol und
36,9 Teilen Hexamethylendiisocyanat (NCO/OH-Verhältnis = 0,99)
in das geschmolzene thermoplastische Polyurethan injiziert.

Versuch c) :

Analog zu Versuch a) wird ein Gemisch aus
15 Teilen 1,4-Butandiol,
42,9 Teilen Diphenylmethandiisocyanat und
10 Teilen Glasfasern
über eine Einspeisöffnung im Gehäuse 5 in das geschmolzene thermoplastische Polyurethan injiziert.

Versuch d) :

Analog zu Versuch a) wird ein Gemisch aus
2,5 Teilen 1,4-Butandiol und
7,1 Teilen Diphenylmethandiisocyanat (NCO/OH-Verhältnis = 1,03)
in das geschmolzene thermoplastische Polyurethan injiziert.

Man erhält bei allen Versuchen b) bis d) Verfahrensprodukte, deren Festigkeitseigenschaften

gegenüber dem unmodifizierten Ausgangspolyurethan erheblich verbessert sind. Insbesondere das unter Mitverwendung von Glasfasern hergestellte Produkt zeichnet sich durch besonders hohe Steifigkeit und Wärmeformbeständigkeit aus.

Versuch e) : (Vergleich)

In die Einzugszone der Schneckenmaschine wird ein Gemisch aus
100 Teilen Adipinsäure/Äthylenglykol-Polyester (Molekulargewicht : 2 000),
25 Teilen 1,4-Butandiol,
0,5 Teilen Stearylamid und
84,4 Teilen Diphenylmethandiisocyanat
eingetragen. Dies entspricht der Gesamtrezeptur aus Versuch a) ; die verschiedenen Polyurethan bildenden Komponenten werden jedoch nach der Verfahrensweise von DE-OS 23 02 564 direkt in der Reaktionsschnecke nach dem One-Shot-Verfahren umgesetzt. Man erhält ein Produkt, dessen Härte (Shore-D) bei 55 liegt und dessen Rückprallelastizität 33 % beträgt. Der Verarbeitungscyclus des Produkts auf Spritzgießmaschinen ist gegenüber dem Verfahrensprodukt von Versuch a) um ca. 15 % verlängert.

Beispiel 2

Als zu modifizierender Thermoplast wird ein Polyurethan eingesetzt, welches nach dem Semipräpolymerverfahren aus
50 Teilen Polypropylenglykol (Molekulargewicht : 2 000),
55,9 Teilen Diphenylmethandiisocyanat,
50 Teilen Adipinsäure/Butandiol-Polyester (Molekulargewicht : 2 000),
15 Teilen 1,4-Butandiol und
1 Teil Stearylamid
hergestellt wurde (NCO/OH-Äquivalentverhältnis = 1,02).

An der Schneckenmaschine werden folgende Gehäusetemperaturen eingestellt :

| Gehäuse : | 1 | 3 | 5 | 7 | 9 | 11 | 12 |
|---|---|---|---|---|---|---|---|
| Temperatur (°C) : | 100 | 220 | 220 | 210 | 180 | 180 | 140 |
| Kopftemperatur : | 200 °C | | | | | | |

In den Trichter der Schneckenmaschine werden 171,9 Teile des thermoplastischen Polyurethans eingetragen. Über eine zweite Einspeisstelle im Gehäuse Nr. 5 wird ein Gemisch aus 12,0 Teilen Toluylendiamin und 16,8 Teilen 1-Amino-3,3,5-trimethyl-5-aminomethyl-cyclohexan injiziert und über eine dritte Einspeisstelle im Gehäuse Nr. 6 45,3 Teile 1-Isocyanato-3,3,5-trimethyl-5-isocyanatomethyl-cyclohexan zudosiert ($NCO/NH_2$-Verhältnis = 1,02).

Man erhält einen Thermoplasten mit verbesserten Festigkeitseigenschaften und einem sehr breiten Verarbeitungsbereich von 180 bis 220 °C (das Ausgangsmaterial hat einen Verarbeitungsbereich von nur 190 bis 200 °C).

Beispiel 3

Der zu modifizierende Thermoplast ist ein Umsetzungsprodukt aus :
100 Teilen Adipinsäure/Butandiol-Polyester (OH-Zahl : 53,3 ; Säurezahl : 0,6),
8,2 Teilen Äthylenglykol und
45,1 Teilen Diphenylmethandiisocyanat (NCO/OH-Verhältnis = 1,00).
Die Lösungsviskosität beträgt 2 500 mPa.s (25 %ig in DMF/MEK = 3 : 1).
An der Schneckenmaschine werden folgende Gehäusetemperaturen eingestellt :

| Gehäuse : | 1 | 3 | 5 | 7 | 9 | 11 | 12 |
|---|---|---|---|---|---|---|---|
| Temperatur (°C) : | 100 | 190 | 190 | 190 | 175 | 100 | 100 |
| Kopftemperatur : | 190 °C | | | | | | |

In den Trichter der Schneckenmaschine werden 153,3 Teile des thermoplastischen Polyurethans eindosiert. In Gehäuse 5 wird in den aufgeschmolzenen Thermoplasten ein Gemisch aus
10,43 Teilen des obigen Adipinsäure/Butandiol-Polyesters,
0,86 Teilen Äthylenglykol und
5,52 Teilen Diphenylmethandiisocyanat (NCO/OH-Verhältnis = 1,2)
injiziert. Das Verfahrensprodukt ist gut löslich und weist als 25 %ige Lösung in Dimethylformamid/Methyläthylketon (3 : 1) bei 25 °C eine Viskosität von 8 700 mPa.s auf.

Hieraus hergestellte Filme weisen eine gegenüber dem Ausgangsprodukt wesentlich verbesserte Festigkeit auf.

**Ansprüche**

1. Verfahren zur Herstellung von thermoplastischen Chemiewerkstoffen durch Umsetzung von
a) einem oder mehreren organischen Polyisocyanaten und
b) einem oder mehreren, Hydroxylgruppen und/oder Aminogruppen aufweisenden Kettenverlängerungsmitteln mit einem Molekulargewicht unter 400,
wobei das Verhältnis der NCO-Gruppen von Komponente a) zu den zerewitinoffaktiven Gruppen der Komponente b) zwischen 0,90 und 1,2 liegt, in Gegenwart eines vorgefertigten thermoplastischen Polymeren in Extrudern, dadurch gekennzeichnet, daß man 70 bis 98 Gew.-%, bezogen auf Verfahrensprodukt, des vorgefertigten thermoplastischen Polymeren über eine erste Einspeisstelle in den Extruder einbringt, danach über eine zweite und gegebenenfalls weitere Einspeisstellen 2 bis 30 Gew.-%, bezogen auf Verfahrensprodukt, der Polyurethan-bildenden Komponenten dem aufgeschmolzenen thermoplastischen Polymeren zudosiert und, nachdem die Umsetzung der Polyurethan-bildenden Komponenten im wesentlichen abgeschlossen ist, das Verfahrensprodukt aus dem Extruder austrägt.

2. Verfahren nach Anspruch 1, dadurch gekennzeichnet, daß als Polyisocyanat a) Diphenylmethandiisocyanat und/oder Hexamethylendiisocyanat eingesetzt werden.

3. Verfahren nach Anspruch 1 oder 2, dadurch gekennzeichnet, daß als Kettenverlängerungsmittel Butandiol eingesetzt wird.

4. Verfahren nach Anspruch 1 bis 3, dadurch gekennzeichnet, daß als weitere Reaktionskomponente im wesentlichen lineare Polyole mit Molekulargewichten zwischen 400 und 10 000 mitverwendet werden.

5. Verfahren nach Anspruch 1 bis 4, dadurch gekennzeichnet, daß als thermoplastisches Polymer ein Polyurethan eingesetzt wird.

**Claims**

1. Process for the production of thermoplastic chemical materials by the reaction of
a) one or more organic polyisocyanates and
b) one or more chain lengthening agents with a molecular weight below 400 containing hydroxyl groups and/or amino groups,
in which the ratio of the isocyanate groups of component a) to the Zerewitinoff active groups of component b) is in the range of from 0,90 to 1,2, in the presence of a previously prepared thermoplastic polymer in extruders, characterised in that 70 to 98 % by weight, based on the product of the process, of the previously prepared thermoplastic polymer are introduced into the extruder at a first inlet, and from 2 to 30 % by weight, based on the product of the process, of the polyurethane forming components are added to the molten thermoplastic polymer through a second feed inlet and optionally other feed inlets, and the product of the process is discharged from the extruder when the reaction of the polyurethane forming components has been substantially completed.

2. Process according to claim 1, characterised in that diphenylmethane diisocyanate and/or hexamethylene diisocyanate are used as polyisocyanate a).

3. Process according to claim 1 or 2, characterised in that the chain lengthening agent used is butanediol.

4. Process according to claims 1 to 3, characterised in that substantially linear polyols with molecular weights from 400 to 10 000 are used as additional reactants.

5. Process according to claims 1 to 4, characterised in that the thermoplastic polymer used is a polyurethane.

**Revendications**

1. Procédé de fabrication de matériaux chimiques thermoplastiques par réaction de
a) un ou plusieurs polyisocyanates organiques et
b) un ou plusieurs agents d'allongement de chaîne présentant des groupes hydroxyle et/ou des groupes amino et ayant un poids moléculaire inférieur à 400,
le rapport des groupes NCO du composant a) envers les groupes actifs selon Zéréwitinoff du composant b) se situant entre 0,90 et 1,2, en présence d'un polymère thermoplastique préfabriqué dans des extrudeuses, caractérisé en ce qu'on introduit 70 à 98 % en poids, par rapport au produit du procédé, du polymère thermoplastique préfabriqué par un premier endroit d'alimentation dans l'extrudeuse, par la suite, par un deuxième et éventuellement d'autres endroits d'alimentation, on ajoute 2 à 30 % en poids, par rapport au produit du procédé, des composants formateurs de polyuréthane au polymère thermoplastique fondu et, après que la réaction des composants formateurs de polyuréthane est essentiellement achevée, on enlève le produit du procédé de l'extrudeuse.

2. Procédé selon la revendication 1, caractérisé en ce qu'en tant que polyisocyanate a) on utilise du diphénylméthane-diisocyanate et/ou de l'hexaméthylène-diisocyanate.

3. Procédé selon la revendication 1 ou 2, caractérisé en ce qu'on utilise du butane diol comme agent

d'allongement de chaîne.

4. Procédé selon les revendications 1 à 3, caractérisé en ce qu'en tant que composant réactionnel supplémentaire on utilise conjointement des polyols essentiellement linéaires ayant des poids moléculaires entre 400 et 10 000.

5. Procédé selon les revendications 1 à 4, caractérisé en ce qu'en tant que polymère thermoplastique on utilise un polyuréthane.